(19)

Europäisches
Patentamt
European
Patent Office
Office européen
des brevets

(11) **EP 3 561 090 A1**

(12) **EUROPEAN PATENT APPLICATION**
published in accordance with Art. 153(4) EPC

(43) Date of publication:
**30.10.2019 Bulletin 2019/44**

(21) Application number: **17882514.7**

(22) Date of filing: **22.12.2017**

(51) Int Cl.:
*C22B 3/00* (2006.01)     *C22B 23/02* (2006.01)
*C22B 5/12* (2006.01)     *C22B 3/42* (2006.01)
*C22B 3/10* (2006.01)     *C22B 1/02* (2006.01)
*C22B 23/06* (2006.01)

(86) International application number:
**PCT/KR2017/015416**

(87) International publication number:
**WO 2018/117771 (28.06.2018 Gazette 2018/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **23.12.2016 KR 20160178039
02.11.2017 KR 20170145279**

(71) Applicants:
• **POSCO**
   **Pohang-si, Gyeongsangbuk-do 37859 (KR)**
• **Research Institute of Industrial Science &
   Technology**
   **Pohang-si, Gyeongsangbuk-do 37673 (KR)**

(72) Inventors:
• **LEE, Byong-Pil**
   **Pohang-si**
   **Gyeongsangbuk-do 37575 (KR)**
• **HAN, Gil-Soo**
   **Gangneung-si**
   **Gangwon-do 25429 (KR)**
• **PARK, Jin-Gyun**
   **Pohang-si**
   **Gyeongsangbuk-do 37591 (KR)**

• **LEE, Jae-Young**
   **Pohang-si**
   **Gyeongsangbuk-do 37673 (KR)**
• **EOM, Hyung-Sub**
   **Pohang-si**
   **Gyeongsangbuk-do 37590 (KR)**
• **JO, Sung-Koo**
   **Pohang-si**
   **Gyeongsangbuk-do 37673 (KR)**
• **LEE, Chang-Kyu**
   **Pohang-si**
   **Gyeongsangbuk-do 37673 (KR)**
• **KIM, Yong-Chan**
   **Pohang-si**
   **Gyeongsangbuk-do 37673 (KR)**
• **KIM, Deok**
   **Pohang-si**
   **Gyeongsangbuk-do 37673 (KR)**
• **LEE, Go-Gi**
   **Pohang-si**
   **Gyeongsangbuk-do 37669 (KR)**

(74) Representative: **Potter Clarkson
   The Belgrave Centre
   Talbot Street
   Nottingham NG1 5GG (GB)**

(54) **METHOD FOR RECOVERING NICKEL AND COBALT FROM NICKEL, IRON, AND COBALT-CONTAINING RAW MATERIAL**

(57)     The present invention relates to a method for recovering nickel and cobalt from a nickel, iron, and cobalt-containing raw material. According to the present invention, high concentrations of valuable metals, such as nickel and cobalt, can be recovered from a raw material containing nickel, iron, and cobalt, and especially, the concentrations of nickel and cobalt are low and the concentration of iron is high, and thus when nickel is leached, a relatively large amount of iron is leached, whereas a small amount of nickel is leached. Therefore, the present invention can be more suitably applied in the smelting of nickel ore in which the separation of iron and nickel is difficult.

**(Cont. next page)**

EP 3 561 090 A1

[Fig. 1]

**Description**

[Technical Field]

The present disclosure relates to a method for recovering nickel and cobalt from a raw material including nickel, iron and cobalt.

[Background Art]

As nickel and iron-containing ores, laterite, a nickel oxide ore, is provided and may be classified as limonite, saprolite and the like, depending on a mineral phase. Since these ores have passive properties and have a high resistance to acids, thus, the dissolution reaction to acids is slow. Accordingly, as a method for effectively leaching nickel, there have been proposed methods for recovering nickel by dissolving in an acid in an autoclave under high temperature and high pressure, known as a 'High Pressure Acid Leaching (HPAL) method.'

When the nickel leaching reaction is carried out at room temperature, the nickel recovery rate does not exceed about 85%, even after leaching for several months or longer. However, when the HPAL method is used, 90% or more of nickel may be leached within 2 hours, as a representative method of nickel oxide ore wet smelting. As examples of techniques for recovering nickel by the HPAL method, Patent Documents 1 and 2 may be provided.

However, it is known that the HPAL method should be carried out under high temperature and high pressure in an autoclave, and is mainly used with a titanium material due to strong acidity, and accordingly, the equipment cost is very high and maintenance costs are high. In addition, since it is necessary to use caustic soda, an expensive precipitant, or an environmentally hazardous precipitant such as $H_2S$, to concentrate the nickel, there may be a problem in which equipment costs for combating pollution increase. In addition, when leaching limonite nickel ore by applying the above method, high-speed leaching is possible, but since the limonite ore has a high iron content and a low nickel content, when the nickel is leached by acid dissolution, a relatively large amount of iron may be leached, while a small amount of nickel may be leached, making it difficult to separate iron and nickel from the leached material.

As techniques to reduce the above problems, there are technologies disclosed in Patent Documents 3, 4, and 5, and the like. Patent Documents 3 and 4 disclose a method for effectively concentrating nickel and recovering ferronickel from such concentrate by separating and recovering nickel and iron from ores having a low quality of nickel. Patent Document 5 discloses a method for improving the nickel content of the nickel concentrate after precipitation by reducing calcined iron ore obtained as a process by-product to then be used as a slurry for precipitation.

However, even in the case of the above-described method, a large amount of impurities such as Mg and Si are contained in addition to nickel and iron in the precipitation reduced raw material, and a large amount of by-products such as slag and the like are generated when ferronickel is recovered after precipitation. In addition, even after precipitation, the content of iron is higher than that of nickel, and may be used as ferronickel, but it is not suitable for producing high purity nickel having a high content of nickel.

[Prior Art Literature]

[Patent Literature]

(Patent Document 1) Korean Patent Laid-Open Publication No. 10-2007-7020915
(Patent Document 2) Japanese Patent Laid-Open Publication No. 2010-031341
(Patent Document 3) Korean Patent No. 10-1353721
(Patent Document 4) Korean Patent No. 10-1359179
(Patent Document 5) Korean Patent No. 10-1657810

[Disclosure]

[Technical Problem]

An aspect of the present disclosure is to provide a method for efficiently recovering nickel and cobalt from a raw material containing nickel, iron and cobalt.

[Technical Solution]

According to an aspect of the present disclosure, a method for recovering nickel and cobalt includes reducing a raw material containing nickel, iron and cobalt with a reducing gas containing hydrogen; adding an acid to the raw material reduced, and leaching the raw material with the acid, to obtain a solution containing nickel, iron and cobalt ions; adding an iron or magnesium-containing hydroxide to the solution to produce a refined solution from which impurities have been removed; precipitating nickel and cobalt by adding reduced iron for precipitation to the refined solution containing nickel and cobalt ions; adding an acid to a precipitate obtained in the precipitating to be subjected to leaching, to obtain a solution containing nickel, iron and cobalt ions; adding an alkaline agent to the solution containing nickel, cobalt and iron ions and oxidizing the solution with oxygen-containing gas to remove iron; and adding an alkaline agent to the solution to obtain a nickel and cobalt hydroxides.

An amount of the reduced iron for precipitation may be 1.5 to 2.5 times a molar sum of nickel and cobalt ions present by Relational Expression 1: Amount (seed ratio) of Reduced iron = (metal Fe content in reduced iron for precipitation)/(Ni+Co ion content in leaching solution).

The reduced iron for precipitation may be obtained by indirect reduction of an iron chloride calcined-iron ore obtained from a by-product of a nickel smelting process with solid carbon or a reducing gas.

A reduction ratio of the reduced iron for precipitation may be 80 to 99%.

The reduced iron for precipitation may have a particle size of 5 $\mu$m or less.

When the iron chloride calcined-iron ore is reduced with a reducing gas, a reduction temperature may be 500°C to 950°C.

When the iron chloride calcined-iron ore is reduced with a reducing gas, a reduction temperature may be 700°C to 1200°C.

Formation of the iron chloride calcined-iron ore may include evaporating and concentrating an iron ion and chlorine ion-containing solution generated as a filtrate in a nickel smelting process to obtain a concentrated solution; crystallizing the concentrated solution to obtain iron chloride crystals; solid-liquid separating the iron chloride crystals and a slurry; and calcining the iron chloride crystals to obtain the iron chloride calcined-iron ore.

The iron ion and chlorine ion-containing solution may be a filtrate generated in the nickel smelting process, the nickel smelting process including dissolving a nickel ore containing nickel and iron in hydrochloric acid to obtain a leaching solution in which nickel and iron ions are leached; adjusting pH by adding an alkaline agent to the leaching solution, and removing solid impurities from the leaching solution by solid-liquid separation; adding nickel ore containing nickel and iron to the leaching solution, and then, precipitating nickel as ferronickel; and filtering and recovering solid precipitates by solid-liquid separation.

The acid added to the reduced raw material may contain a nickel and cobalt-containing acid obtained by treating a post-filtration liquid filtered after precipitation with an ion-exchange resin to recover remaining nickel and cobalt and by eluting the ion-exchange resin with an acid.

The nickel and cobalt-containing acid obtained by the ion exchange resin may be re-introduced into a leaching process.

The alkaline agent may be one or more selected from calcium hydroxide and calcium carbonate.

The nickel and cobalt hydroxides may be leached with sulfuric acid and subjected to solvent extraction, to produce nickel sulfate and cobalt sulfate.

In the obtaining of the nickel and cobalt hydroxides by adding the alkaline agent, a chlorine component and a calcium component in the leaching solution may be removed in the form of calcium chloride.

H$_2$S may be added instead of the alkaline agent.

[Advantageous Effects]

According to an embodiment of the present disclosure, valuable metals such as a high concentration of nickel and cobalt may be recovered from a raw material containing nickel, iron and cobalt. In detail, an embodiment in the present disclosure may be more suitably applied to a case in which a nickel concentration is relatively low and an iron concentration is relatively high, and thus, a large amount of iron is leached, while a small amount of nickel is leached, when nickel is leached, it is difficult to separate iron and nickel from each other.

[Description of Drawings]

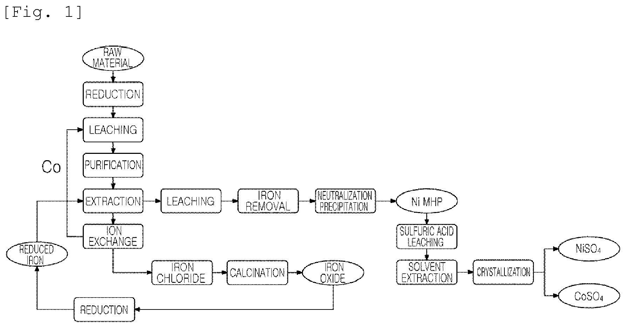

FIG. 1 is a schematic flow chart illustrating a nickel and cobalt recovery method according to an embodiment of the present disclosure.

[Best Mode]

Hereinafter, preferred embodiments of the present disclosure will be described with reference to various embodiments. However, the embodiments of the present disclosure may be modified into various other forms, and the scope of the present disclosure is not limited to the embodiments described below.

According to an embodiment in the present disclosure, a method for producing a high concentration of nickel concentrate from a nickel, iron and cobalt containing raw material is provided. A method for recovering nickel and cobalt, comprising: reducing a raw material containing nickel, iron and cobalt with a reducing gas containing hydrogen; adding an acid to the reduced raw material, and leaching the raw material with the acid, to obtain a solution containing nickel, iron and cobalt ions; adding an iron or magnesium-containing hydroxide to the solution to produce a refined solution from which impurities have been removed; precipitating nickel and cobalt by adding reduced iron for precipitation to the refined solution containing nickel and cobalt ions; adding an acid to a precipitate obtained in the precipitating and leaching to obtain a solution containing nickel, iron and cobalt ions; adding an alkaline agent to the solution containing nickel, cobalt and iron ions and oxidizing the solution with oxygen-containing gas to remove iron; and adding an alkaline agent to the solution to obtain nickel and cobalt hydroxide.

The nickel-iron-containing raw material to which the present disclosure may be applied is not particularly limited, and any nickel or iron-containing raw material may be used as long as it contains nickel and iron, and in detail, nickel ore such as limonite or saprolite.

Nickel ore has a content of 1 to 2.5% of Ni and 15 to 55% of Fe, though the amount thereof varies depending on the type of ore. In the case of limonite ores, the nickel concentration is as low as 1 to 1.8% and the iron concentration is as high as 30 to 55 %. An embodiment of the present disclosure may also be effectively applied to recovering nickel from such a relatively low nickel containing limonite. Hereinafter, a method of producing a nickel concentrate from a nickel, iron and cobalt-containing raw material according to an embodiment of the present disclosure will be described in detail.

Pretreating Nickel, Iron and Cobalt-Containing Raw Material

In recovering nickel from the nickel, iron and cobalt-containing raw material, a pretreatment process may be carried out if necessary to effectively reduce the nickel, iron and cobalt-containing raw material in a reduction process. This pretreatment process includes drying, grinding and firing.

The nickel, iron and cobalt-containing raw material usually contains about 20 to 40% of adhesion water and about 10% of crystal water. In the case of containing such adhesion water, grinding efficiency is lowered, and in the case of grinding after firing the nickel-iron-containing raw material, there is a fear that pulverizing equipment may be loaded due to high temperature. Therefore, drying may be performed the nickel-iron-containing raw material before grinding the raw material into fine particles, and is not particularly limited as long as the adhesion water may evaporate. For example, the drying may be performed in a temperature range of 100°C to 200°C.

In the case in which the nickel, iron and cobalt-containing raw material is pulverized after drying, the particle size may be 1 mm or less. The particle size of 1 mm or less may improve reduction and leaching efficiency. A lower limit of the particle size is not particularly limited, but may be 10 m or more for efficiency of a pulverizing process.

On the other hand, the crystal water may not be removed in the drying process, causing a decrease in reaction efficiency in a reduction reaction. Therefore, the crystal water may be removed by a firing treatment. The firing treatment may be performed at a temperature ranging from 250°C to 850°C depending on the type of ore.

Reducing Raw Material Containing Nickel, Iron and Cobalt with Reducing Gas Containing Hydrogen

The nickel, iron and cobalt-containing raw material is reduced to obtain reduced nickel, iron and cobalt-containing raw material. The reduction may be performed in a temperature range of 550°C to 950°C, using a reducing gas containing hydrogen as a reducing agent.

In the case of the reduction temperature less than 550°C, since the reduction is insufficient and the recovery rate at a subsequent leaching is lowered, precipitation efficiency may also be lowered. As the reduction temperature is increased, a leaching yield and precipitation efficiency may be increased. However, if the reduction temperature is higher than 950°C, there is no increase in the reduction efficiency and the workability due to intergranular sintering may be lowered.

As the reducing gas, a gas containing hydrogen may be used. There is a case in which CO gas is used instead of hydrogen, but in this case, it is necessary to reduce at a high temperature of 1000°C or more, and further, the activity of powder reduced at a high temperature may be lowered, and the rate of leaching may be lowered, and further, precipitation efficiency may be lowered.

As the reducing gas, a gas containing hydrogen may be used, and hydrogen may also be used alone or in combination with an inert gas. Examples of the inert gas include helium, argon, carbon dioxide, nitrogen and the like. Another example of the hydrogen-containing reducing gas includes a cokes oven gas (COG) containing 50% or more of hydrogen generated in an iron ore smelting process or a gas generated in a methane hydrogen reforming reaction, a hydrogen-containing LNG reforming gas containing 65% or more of hydrogen.

Hydrogen contained in the reducing gas reacts with oxygen of nickel and iron present in an oxidized state in the nickel, iron and cobalt-containing raw material to produce water, thereby performing reduction. As an example, the theoretical reduction reaction in the case of using limonite ore is shown in the following Formula 1.

$$(Ni_{0.1}Fe_{0.9})OFe_2O_3 + 4H_2 = (Ni_{0.1}Fe_{0.9}) + 2Fe + 4H_2O \ ...... \qquad \text{Formula 1}$$

An amount of hydrogen contained in the reducing gas may be increased by more than a theoretical equivalence ratio to obtain efficient reduction reaction. In this case, in consideration of an increase in process costs, the molar ratio of the theoretical equivalence ratio may be 1 to 5 times, 2 to 5 times, 2 to 4 times or the like.

The nickel, iron and cobalt containing raw material, having been reduced by the above-described reaction, may be obtained, and hydrogen not participating in the reaction among the introduced hydrogen may be recovered and reintroduced into a process.

Adding an acid to the reduced raw material to then be subjected to leaching to obtain a solution containing nickel, iron and cobalt ions

According to an embodiment in the present disclosure, the reduced raw material is slurried, and then, acid is added to the slurry to dissolve and leach nickel, iron and cobalt contained in the reduced raw material of the slurry, such that nickel is ionized as nickel ions, iron is ionized as iron ions, and cobalt ionized as cobalt ions. The leaching acid may be hydrochloric acid, sulfuric acid, or the like.

Further, the acid may be obtained by treating a post-filtration liquid filtered after precipitation to be described later, with an ion-exchange resin, to recover remaining nickel and cobalt, and then eluting the resin with an acid to obtain an acid mixed with nickel and cobalt-containing acid and leaching acid. The ion-exchange resin may normally be a bis-picolylamine resin, or as the ion-exchange resin, a resin capable of selectively adsorbing nickel and cobalt may be used. As described above, a nickel and cobalt-containing acid is mixed with a leaching acid to dissolve nickel and iron cobalt, thereby further recovering nickel and cobalt that is filtered without precipitation in a precipitation operation.

Generally, when the reduced raw material reduced by the reduction reaction of the above Formula 1 is leached with an acid, ferronickel in the reduced raw material is dissolved by the acid by the reaction as shown in the following Formulae 2 and 3, and is leached as ferronickel ions.

$$(Ni_{0.1}Fe_{0.9}) + 2Fe + 6HCl = (Ni_{0.1}Fe_{0.9})Cl_2 + 2FeCl_2 + 3H_2 \qquad ...\text{Formula 2}$$

$$(Ni_{0.1}Fe_{0.9}) + 2Fe + 3H_2SO_4 = (Ni_{0.1}Fe_{0.9})SO_4 + 2FeSO_4 + 3H_2 \ ... \qquad \text{Formula 3}$$

When hydrochloric acid is used as an acid to leach such a reduced raw material into an acid, hydrochloric acid should be added at a molar number twice or more the number of moles of (Fe + Ni), as can be seen from the above Formula 2. However, if hydrochloric acid is added in a quantity exceeding 4 times the number of moles of (Fe + Ni), further improvement in leaching efficiency may not be obtained, and thus, hydrochloric acid may be added in a molar amount of 2 to 4 times the number of moles of (Fe + Ni). On the other hand, in the case of using sulfuric acid as an acid, sulfuric acid may be add at a molar number of not less than 1 time and not more than twice the number of moles of (Fe + Ni) of a nickel iron containing raw material, as can be seen from the above Formula 3.

Adding a hydroxide containing iron or magnesium to the solution to produce a refined solution from which impurities have been removed

On the other hand, oxides such as $Al_2O_3$, $SiO_2$, $Cr_2O_3$ or the like contained in a nickel, cobalt and iron-containing raw material may barely be dissolved by acid and may remain as solid phase residues, but some thereof may be dissolved by acid and eluted into the leaching solution. The eluted Al, Si, Cr and the like are elements which may deteriorate the precipitation ability and the quality of nickel, cobalt and iron precipitates in a subsequent precipitation operation, and therefore, may be removed before a precipitation operation.

The elements such as Al, Si, and Cr dissolved in the above-mentioned leaching solution may be precipitated and removed as a solid hydroxide by changing pH of a leaching solution by adding an alkaline agent to the leaching solution. In this case, the alkaline agent added for controlling the pH of the leaching solution is not particularly limited and may be used without limitation as long as the pH of the leaching solution may be increased. For example, hydroxides of metals such as Ca, Mg, Fe, and Ni and oxides such as CaO and MgO may be used alone or in combination.

The amount of the alkaline agent added to the leaching solution is not particularly limited, but may be added in an amount in which the pH of the leaching solution may be adjusted to a range of 1.5 to 3.5. The pH of the leaching solution is usually 1 or less and the acidity thereof is relatively high by the added acid. When the pH is adjusted to be within the above range, impurities such as Al, Si, Cr and the like in the solution are effectively precipitated as hydroxide. However, if the pH is more than 3.5 when the alkaline agent is added, nickel, cobalt and iron in the solution are precipitated as hydroxides, and thus, a recovery rate thereof may be lowered.

The alkaline agent to be added for controlling the pH of the leaching solution is not particularly limited, and may be used without limitation as long as the pH of the leaching solution may be increased. For example, hydroxides of metals such as Ca, Mg, Fe, and Ni and oxides such as CaO and MgO may be used alone or in combination.

The solid residue precipitated as described above may be easily separated by filtration and may be separated by a solid-liquid separator such as a filter press or a decanter to obtain a leaching solution containing nickel, cobalt and iron ions.

Precipitating nickel and cobalt by adding, reduced iron for precipitation, to the refined solution containing nickel and cobalt ions

The concentrated nickel, iron and cobalt ions are precipitated as a nickel concentrate. In an embodiment of the present disclosure, when precipitated as the nickel concentrate, reduced iron indirectly reduced by solid carbon or a reducing gas is used as a seed material for precipitation, and may be in powder form.

When the reduced iron for precipitation is added to the nickel, iron and cobalt ion-containing solution (leaching solution), the nickel of nickel and iron ions dissolved by the reaction represented by the following formulae 4 or 5 is substituted with a nickel concentrate metal by iron of calcined reduced iron for precipitation.

$$(FeCl_2 + NiCl_2 + CoCl_2) + 3Fe = FeNiCo + 3FeCl_2 \ldots \qquad \text{Formula 4}$$

$$(FeSO_4 + NiSO_4 + CoSO_4) + 3Fe = FeNiCo + 3FeSO_4 \ldots \qquad \text{Formula 5}$$

The principle of the substitution reaction as in the above formulae is based on a natural potential difference between iron, nickel and cobalt. For example, a cell is formed by a natural potential difference between nickel and iron of the iron powder for precipitation in the solution containing iron and nickel ions, and at the anode site, a dissolution reaction proceeds by oxidation of iron, and at the cathode site, a reaction in which nickel ions in the iron and nickel ion-containing solution are reduced and precipitated proceeds. The reaction proceeds with a mechanism such as cobalt and iron, and the reaction in which cobalt ions are reduced and precipitated proceeds.

The reduced iron for precipitation requires very high activity to enable efficient precipitation of nickel. Reduced iron having such high activity may be obtained by reducing, at 700 to 900°C with hydrogen, iron oxide obtained by calcining a ferric chloride crystal in the process.

In more detail, a reduced iron for precipitation may be obtained by directly reducing iron chloride calcined-iron ore obtained from a by-product of a nickel smelting process with solid carbon or a reducing gas.

The iron chloride calcined-iron ore may be obtained from an iron ion and chlorine ion-containing solution generated as a filtrate in a nickel smelting process for recovering nickel from a nickel ore containing nickel and iron using a hydrochloric acid solution.

An example of a process for obtaining iron chloride calcined-iron ore used in an embodiment of the present disclosure is as follows. A concentrated solution is obtained by evaporating and concentrating a solution containing iron ions and chlorine ions, generated as a filtrate, in a nickel smelting process for recovering nickel from a nickel ore containing nickel and iron using a hydrochloric acid solution. Then, iron chloride crystals are obtained by crystallizing the concentrated solution. Subsequently, the iron chloride crystals and a slurry are subjected to solid-liquid separation. The iron chloride crystals are calcined, thereby obtaining iron chloride calcined-iron ore.

The iron ion and chlorine ion-containing solution may be obtained by the following process. For example, the iron ion and chlorine ion-containing solution may be a filtrate generated in a nickel smelting process, including a leaching operation of dissolving nickel ore containing nickel and iron with hydrochloric acid to obtain a leaching solution in which nickel and iron ions are leached; a pH adjusting operation of adjusting pH by adding an alkaline agent to the leaching solution, and removing solid-phase impurities from the leaching solution by solid-liquid separation; adding nickel ore containing nickel and iron to the leaching solution, and then, precipitating nickel as ferronickel; and a precipitate recovery operation of filtering and recovering a solid-phase precipitate from the leaching solution by solid-liquid separation.

On the other hand, when reducing the iron chloride calcined-iron ore using a reducing gas, a reduction temperature may be 500 to 950°C. If the reduction temperature is less than 500°C, there is a problem in terms of a speed, in which $Fe_2O_3$ which is a Fe oxide of calcined iron ore is reduced to Fe from $Fe_3O_4$ without passing through FeO which is a reducing intermediate phase, resulting in a relatively long reduction time. If the reduction temperature is more than 950°C, which is a too excessive temperature for reduction to occur, reduced Fe is sintered or energy is excessively consumed, which may be problematic from the viewpoint of economical efficiency. As the reducing gas, hydrogen, CO, a mixed gas thereof, or a gas containing at least one of hydrogen and CO may be used. For example, the reducing gas may be 100% of hydrogen or 100% of CO or a mixture gas of hydrogen and CO or hydrogen + CO + LNG reforming gas, or a mixture gas such as COG or the like.

When the iron chloride calcined-iron ore is reduced using solid carbon with a reducing agent, a reduction temperature may be 700 to 1200°C. If the reduction temperature is less than 700°C, there is a problem in which a reduction takes a long time. If the reduction temperature is more than 1200°C, reduced Fe is sintered or energy is excessively consumed, which may be problematic in terms of economical efficiency. As the solid carbon, coal, coke, or the like may be used.

The reduced iron for precipitation may contain 5% by weight or less, in detail, 3% by weight or less, of elements such as Mg, Si, Al and the like in a total content, in addition to Fe and Ni. For example, the calcined reduced iron for precipitation may include 58 to 72 wt% of Fe, 1 wt% or less of Ni, 5 wt% or less, in detail 3 wt% or less of Mg, Si and Al in a total content, and a remainder of oxygen and other impurities.

On the other hand, the reduction ratio of the calcined reduced iron for precipitation may be 80 to 99%. If the reduction ratio is less than 80%, it is easy to secure a Ni precipitation rate of 97% or more in the precipitation operation, but since the content of impurities such as unreduced oxygen or the like in the calcined reduced iron for precipitation is high, the Ni content of the Ni concentrate after precipitation is low, and thus, there is a drawback in that the cost of a subsequent process increases. When the reduction ratio exceeds 99%, the amount of impurities is low, but there is a disadvantage in that the precipitation rate is decreased due to the increase of the particle size due to the sintering of the metal Fe in the calcined reduced iron for precipitation after the reduction. Also, a high reduction ratio of more than 95% may be disadvantage in terms of considering additional reduction costs.

The average grain size of the calcined reduced iron for precipitation may be 5 μm or less. The reason for limiting the particle size of the calcined reduced iron for precipitation is to increase a specific surface area for the smooth reaction of the metal Fe in the calcined reduced iron for precipitation and Ni ions in the leaching solution, in the solution during a precipitation process. The particle size may be controlled by a general dry/wet grinding process.

In addition to iron oxide obtained from the iron chloride crystals, iron oxide or reduced iron having the high specific surface area and high activity after reduction may be applied to an embodiment in the present disclosure.

The amount of reduced iron for precipitation to be added to the iron, nickel, and cobalt ion-containing solution for the reduction of nickel and cobalt may be controlled depending on the amount of the reduced raw material for leaching. The use rate of such iron powder is very important as a factor determining the precipitation recovery rate of nickel and the nickel concentration of the resulting final product and the ratio of iron to nickel.

In an embodiment of the present disclosure, the amount of the reduced iron for precipitation may be changed depending on the nickel content of the iron and nickel ion-containing solution. To satisfy the nickel recovery rate of 95% or more, the addition amount of 1.5 to 2.5 times by weight %, defined by the following relational expression 1, may be satisfied.

$$\text{Addition Amount (Seed ratio)} = (\text{Fe content in reduced iron for precipitation})/(\text{Ni+Co ion content in leaching solution})$$

The relational expression 1 is a formula defining the amount of iron powder for precipitation in consideration of the content of nickel and cobalt in the solution to be precipitated. In this case, in consideration of a precipitation reaction of the metal iron in the reduced iron for precipitation and nickel ions in the leaching solution in the above-described formulae 4 and 5, reduced iron for precipitation containing metal iron of 1.5 to 2.5 times the nickel and cobalt content contained in the leaching solution may be added.

If the amount of iron is less than 1.5 times, the amount of iron powder for precipitation is small, such that the nickel content of the nickel concentrate after precipitation becomes as high as 40% or more. However, there is a high possibility that nickel ions which do not participate in precipitation reaction may be present in the solution, which is not good in terms of recovery rate. If the amount of iron exceeds 2.5 times, a high nickel recovery rate as high as about 99% may be obtained, but nickel content in a nickel concentrate after precipitation is too low, and thus, additional costs for an additional process such as iron removal in a subsequent process will increase.

Adding an acid to the precipitate obtained in the precipitation operation to then be subjected to leaching to obtain a solution containing nickel, cobalt and iron ions

After nickel, cobalt and iron precipitates are prepared, acid is added to dissolve the nickel, cobalt and iron precipitates to ionize nickel to nickel ion, cobalt to cobalt ions and iron to iron ions. Although the acid used in the acid leaching operation is not particularly limited, hydrochloric acid or sulfuric acid may be used.

Generally, when the reduced raw material reduced by the reduction reaction of the above formula 1 is leached with an acid, reaction is represented as shown in the following formulae 6 and 7, to dissolve nickel, cobalt and iron in the nickel, cobalt and iron precipitates by the acid to leach into nickel, cobalt and iron ions, respectively.

$$(Ni, Co, Fe) + 6HCl = (Ni, Co, Fe)Cl_2 + + 3H_2 \text{ ...} \qquad \text{Formula 6}$$

$$(Ni, Co, Fe) + 3H_2SO_4 = (Ni, Co, Fe)SO_4 + 3H_2 \text{ ...} \qquad \text{Formula 7}$$

Adding an alkaline agent to the nickel-cobalt and iron-containing solution obtained in the above operation, and oxidizing the solution with oxygen-containing gas to remove iron

The removal of iron from the nickel, cobalt and iron-containing acid leaching solution obtained through the re-leaching is accompanied by the following oxidation and reduction reactions. For example, in an embodiment of the present disclosure, an oxidation precipitation method includes a process of oxidizing $Fe^{2+}$ ions to $Fe^{3+}$ ions and a process of neutralizing $Fe^{3+}$ ions to be precipitated as solid precipitates such as FeOOH as shown in the following reaction formula.

$$\text{Oxidation reaction: } Fe^{2+} + 1/4O_2 + 1/2H_2O = Fe^{3+} + OH^- \qquad ..\text{Formula 8}$$

$$\text{Neutralization reaction: } Fe^{3+} + 3OH^- = FeOOH + H_2O \text{ ..} \qquad \text{Formula 9}$$

$$\text{Overall reaction: } Fe^{2+} + 1/4O_2 + 2OH^- = FeOOH + 1/2H_2O \text{ ..} \qquad \text{Formula 10}$$

The introduction of the oxygen may be implemented not only by pure oxygen but also by the introduction of air. In detail, the oxygen may be introduced at a rate of 0.01 L/min to 0.2 L/min per 1 L of the leaching solution, and in the case of introduction of air, the air may be introduced at a rate of 2 to 10 times the introduction rate. For example, the introduction of air may be carried out at a rate of 0.02 L/min to 2 L/min per liter of the leaching solution.

When the introduction rate of oxygen and air is less than the above range, the process of oxidizing $Fe^{2+}$ ions to $Fe^{3+}$ ions may be insufficiently performed. When the introduction rate of oxygen and air exceeds the above range, the consumed amount of oxygen and air increases, which may be a drawback in terms of costs.

To oxidize $Fe^{2+}$ ions, an oxidizing agent such as hydrogen peroxide, NaOCl or the like may be used. Since the oxidizing agent has a high rate of oxidation, Fe may be removed in a short time, while the cost of the oxidizing agent is expensive. Thus, in a case in which Fe is present in the leaching solution at a higher concentration than Ni and Co, the cost of the oxidizing agent relative to Ni and Co is excessively high. Therefore, according to an embodiment in the present disclosure, oxygen or air, which is inexpensive, is used as an oxidizing agent, although the oxidation reaction rate is lower than that of hydrogen peroxide and NaOCl.

Further, to increase the reaction efficiency between the gas such as oxygen and air and the solution, an interfacial area of bubble should be increased. To this end, the bubble size may be reduced to increase the area of an interface between the bubbles and the solution.

According to an embodiment in the present disclosure, a bubble miniaturization method is not particularly limited, and for example, may be performed using a microbubble generator. Microbubble generators may be classified into various types such as spiral liquid flow type, venturi type, ejector type, pressurized dissolution type, and the like depending on the generation principle. Any type thereof may be used in the present disclosure.

The temperature of the acid leaching solution may be maintained at 40°C to 99°C. If the temperature of the acid leaching solution is less than 40°C, the reaction rate is lowered. If the temperature of the acid leaching solution is more than 99°C, the water evaporates and energy consumption is increased.

When $Fe^{2+}$ ions are oxidized to $Fe^{3+}$ ions, neutralization precipitation may occur in a solid form at a lower pH region than that of $Ni^{2+}$ ions and $Co^{2+}$ ions, such that a neutralizing agent capable of supplying $OH^-$ ions is added to precipitate $Fe^{3+}$ ions in a solid form. The neutralizing agent in the form of a solid powder may be mixed with water to be added in the form of a slurry, and in this case, the neutralizing agent may be mixed with 1 to 10 times by weight of water based on the weight of the neutralizing agent.

The neutralizing agent may be a Ca-based neutralizing agent, a Mg-based neutralizing agent or a mixture thereof. The Ca-based neutralizing agent may be at least one selected from the group consisting of limestone, $CaCO_3$, CaO and $Ca(OH)_2$, and the Mg-based neutralizing agent may be at least one selected from the group consisting of, for example, magnesite, $MgCO_3$, MgO and $Mg(OH)_2$.

The $Fe^{3+}$ ions are precipitated in solid form by the addition of such a neutralizing agent. In this case, there is a high possibility that Ni and Co may co-precipitate with Fe, and as the pH of the solution increases, coprecipitation loss increases. On the other hand, if the pH is only maintained at a low level to significantly reduce the losses of Ni and Co, the iron removal rate decreases and the productivity decreases. Therefore, it may be significantly important to maintain the pH within an appropriate range region during the iron removal process in terms of Ni/Co loss and productivity.

Therefore, according to an embodiment in the present disclosure, in the operation of adding the neutralizing agent to precipitate the oxidized $Fe^{3+}$ ions into a solid, pH may be maintained at a pH of 2 to 4. If the pH is less than 2, the iron removal rate is decreased and the productivity is lowered. If the pH is higher than 4, there is a problem in which the coprecipitation loss in which Ni and Co are coprecipitated with Fe is increased.

On the other hand, if the neutralizing agent feed rate is faster than the oxidation reaction rate of $Fe^{2+}$ ions to $Fe^{3+}$ ions, the supplied $OH^-$ ions increase the pH of the solution, such that the losses of Ni and Co increase. On the other hand, if the neutralizing agent feed rate is slower than the oxidation reaction rate, the pH of the solution decreases, but the total iron removal rate decreases.

Therefore, the pH of the solution may be maintained to be within an appropriate range region by matching the rate of oxidation reaction of $Fe^{2+}$ ions to $Fe^{3+}$ ions and the rate of addition of the neutralizing agent. To this end, in an embodiment of the present disclosure, Ca, Mg or a mixture thereof, having the same molar amount of Fe in the content of the neutralizing agent may be added. Thus, a certain level of iron removal may be secured simultaneously with significantly reducing Ni and Co loss. In detail, the neutralizing agent may be introduced at a rate of 0.05 g/min to 0.2 g/min per liter of the leaching solution.

For example, when the Fe concentration in the solution is 1 mole, 1 mole of $CaCO_3$ is added. However, since the iron removal rate may be significantly lowered in the latter half of the process in which the Fe concentration is lowered, most of the Fe may be removed by the oxidation precipitation method using oxygen, and a remaining small amount of Fe may be removed with hydrogen peroxide, NaOCl or the like having a quick reaction. However, since a small amount of residual Fe may be removed by other methods such as solvent extraction or the like in a subsequent operation, it is not always necessary to use hydrogen peroxide, NaOCl or the like.

Adding an alkaline agent to the solution to obtain nickel and cobalt hydroxides

Nickel and cobalt in the iron-free nickel and cobalt-containing solution may be prepared as solid hydroxides for commercialization. Nickel and cobalt dissolved in the nickel and cobalt-containing solution may be precipitated as solid hydroxides by changing pH of the nickel and cobalt-containing solution in the same manner as the foregoing method of removing impurities such as Al, Si, Cr and the like in the leaching solution. Although the alkaline agent added to the nickel and cobalt-containing solution is not particularly limited, the alkaline agent may be added in an amount to such an extent that the pH of the nickel and cobalt-containing solution may be controlled within the range of 8 to 10. The pH of the nickel and cobalt-containing solution is usually from 2 to 4 with the addition of an alkaline agent as a neutralizing agent while removing iron. When the pH is adjusted to be within the above range, nickel and cobalt in the solution are effectively precipitated as hydroxides of $Ni(OH)_2$ and $Co(OH)_2$, respectively.

When the pH is 8 or less in adding the alkaline agent, nickel and cobalt in the solution may not be precipitated as hydroxides and may remain in the solution, such that the recovery rate thereof may be lowered. The alkaline agent added for controlling the pH of the leaching solution is not particularly limited and may be used without limitation as long as it can increase the pH of the leaching solution. For example, hydroxide of a metal such as Ca, Mg, Fe, Ni or the like and an oxide such as CaO, MgO or the like may be used alone or in combination.

The precipitated nickel and cobalt hydroxides in the solid phase are easily separated by filtration and may be separated by a solid-liquid separator such as a filter press or a decanter, to obtain nickel and cobalt hydroxides having solid phases.

With the obtained nickel and cobalt hydroxides, various products such as nickel and cobalt metals, nickel and cobalt sulfates, nickel and cobalt chlorides and the like may be produced by a known wet process or reduction process, or the like, depending on a target product provided later.

For example, nickel and cobalt hydroxides are leached with sulfuric acid to refine a small amount of impurities by a known technique such as solvent extraction or the like, and nickel and cobalt sulfates such as $NiSO_4$, $CoSO_4$ and the like may be produced through evaporation crystallization, which may be used as raw materials of a secondary battery anode.

In addition, nickel and cobalt hydroxides may be fired at a temperature of 600°C or higher to produce nickel and cobalt oxides such as NiO and CoO, respectively, and then reduced with a reducing agent such as hydrogen, carbon monoxide or coal to produce nickel and cobalt metals, respectively.

Hereinafter, embodiments of the present disclosure will be described in more detail. The following embodiments are intended to further illustrate the present disclosure and are not intended to limit the present disclosure.

[Mode for Invention]

**Embodiment**

Limonite ores having the composition shown in the following Table 1 were dried in a rotary kiln of 150°C for 30 minutes and then pulverized using a super mill to prepare powder having an average particle size of about 15 μm. The obtained powder was fired in a firing furnace maintained at 700°C to 800°C for 1 hour to remove crystal water from the ore powder.

The fired nickel ore was discharged from a calcination furnace and charged in a rotary kiln reduction furnace from which oxygen was shut off. Then, using hydrogen of 2 times the mole number of (Ni+Fe) contained in the prepared ore powder, the ore was reduced at 850°C to produce reduced ore. The components of the reduced ore obtained by such reduction are analyzed and shown in Table 1 below. In Table 1, the content of each component represents weight%, and the remainder thereof are oxygen and small amounts of Cr, Mn and the like. The reduced ore produced as described above was cooled in an anoxic tank filled with nitrogen gas, and 150 ml of water was added to 150 g of the reduced ore to prepare a slurry.

[Table 1]

|  | Ni | Fe | Mg | Si | Al | Co |
|---|---|---|---|---|---|---|
| Dry Ore | 1.33 | 44.2 | 1.7 | 3.9 | 2.4 | 0.18 |
| Reduced Ore | 1.85 | 61.6 | 2.4 | 5.4 | 3.3 | 0.25 |

On the other hand, a solution containing iron ions and chlorine ions, which are by-products of a nickel smelting process, was evaporated and crystallized at a temperature of 80°C and at 1 atm to obtain iron chloride crystals, to then be subjected to solid-liquid separation. Then, then iron chloride crystals are calcined at a temperature of 800°C to prepare iron oxide.

The composition of the iron oxide is shown in Table 2 below.

Iron oxide having the composition shown in the following Table 2 was indirectly reduced under the conditions shown in Table 3 to prepare reduced iron for precipitation.

The composition of the reduced iron for precipitation prepared as described above is shown in Table 4 below.

Table 4 also shows the composition of the reduced ore for precipitation according to the related art. In the following Tables 2 and 4, the content of each component represents weight%, and the remainder thereof are oxygen and small amounts of Cu, Zn and the like.

[Table 2]

|  | Mg | Ca | Mn | Fe | Si | Al | P | S | Cl |
|---|---|---|---|---|---|---|---|---|---|
| Iron Oxide | 0.60 | 0.015 | 1.32 | 69.0 | 0.012 | <0.005 | <0.005 | <0.005 | 0.068 |

[Table 3]

|  | Reduction Agent Type | Reduction Temperature(°C) | Reduction Period of Time |
|---|---|---|---|
| Reduced Iron for Precipitation | Hydrogen Gas | 850°C | 60 Minutes |

[Table 4]

| Precipitation Seed Type | Mg | Ca | Mn | Fe | Co | Ni | Si | Al |
|---|---|---|---|---|---|---|---|---|
| Reduced Iron for Precipitation | 0.81 | 0.02 | 1.79 | 93.7 | 0.10 | 0.33 | 0.02 | 0.01 |
| Reduced Ore for Precipitation | 2.35 | 0.13 | 1.00 | 61.6 | 0.29 | 1.85 | 5.41 | 3.33 |

With respect to the slurry of the reduced raw material prepared as described above, 20% concentration of hydrochloric acid was added to the slurry to prepare 1 liter of a solution, which was then stirred to conduct an acid leaching reaction in which nickel, cobalt and iron ions were leached from the reduced ore. The leaching solution obtained by the leaching reaction was concentrated to provide a leaching solution having various contents of Ni and Co components as shown in Table 5 below.

To precipitate nickel, cobalt and iron precipitates from the prepared leaching solution, the reduced iron for precipitation and reduced ore for precipitation prepared as described above were added to the leaching solution to perform substitution and precipitation reaction of nickel, cobalt and iron precipitates. The amounts of the reduced iron for precipitation and the reduced ore for precipitation are shown in Table 5 below. After the substitution and precipitation reaction was performed for 2 hours, nickel, cobalt and iron precipitate cake and the solution were separated, and then, the Ni and Co contents of the cake were examined, and the precipitation rates were examined, respectively. The precipitation rates were calculated by the following formula.

$$\text{Precipitation rate (\%)} = \{(\text{metal content of leaching solution} - \text{metal content of solution after precipitation})/(\text{metal content of leaching solution})\} \times 100$$

[Table 5]

| Classification | Leaching Liquid Composition (mg/l) | | Precipitation Seed | Precipitation Seed Amount (seed ratio) | Nickel Concentrate Composition (wt%) | | Precipitation rate (%) | |
|---|---|---|---|---|---|---|---|---|
| | Ni | Co | | | Ni | Co | Ni | Co |
| Embodiment Example 1 | 2783 | 283 | Reduced Iron for Precipitation | 3.0 | 19.9 | 1.67 | 96.2 | 57.8 |
| Embodiment Example 2 | 4448 | 442 | Reduced Iron for Precipitation | 2.3 | 27.9 | 2.02 | 97.9 | 64.2 |
| Embodiment Example 3 | 5338 | 511 | Reduced Iron for Precipitation | 1.9 | 33.1 | 2.2 | 96.3 | 57.3 |
| Comparative Example 1 | 4044 | 336 | Iron Powder for Precipitation | 0.5 | 11.4 | 0.2 | 91.3 | 6.9 |
| Comparative Example 2 | 2730 | 436 | Reduced Ore for Precipitation | 4.0 | 7.6 | 0.39 | 93.7 | 13.4 |

As shown in Table 5, it can be seen that 96% or more of Ni and 50% or more of Co are precipitated in the embodiment example satisfying the conditions of the present disclosure. In detail, a high concentration of precipitates containing about 20% by weight or more of Ni may be secured.

On the other hand, as shown in Table 5, the Ni concentrates of Comparative Examples 1 and 2 deviating from the conditions of the present disclosure do not contain 20% in the amount thereof, and the precipitation rates are also low, and thus, it is difficult to secure a precipitate having high Ni and Co contents as in the present disclosure.

The nickel, cobalt and iron precipitates obtained as above were leached using hydrochloric acid, and iron was removed using oxygen and $CaCO_3$ as a neutralizing agent. As shown in Table 6, the recovery rates of the respective elements in the leaching process are all 99% or more, and the removal rate of iron in a subsequent iron removing process is 99.9% or more.

[Table 6]

| Classification | Ni | Co | Fe |
|---|---|---|---|
| Precipitate | 20.4% | 1.24% | 43.2% |
| Liquid after Leaching | 16.0g./L | 0.90g/L | 34.8g/L |
| Leach Recovery Rate | 99.9% | 99.8% | 99.5% |
| Liquid after Iron Removal | 13.0g/L | 0.68g/L | 0.033g/L |
| Iron Removal Process Recovery Rate | 99.0% | 96.2% | 0.1% or less |

Nickel and cobalt hydroxides could be prepared by adding an alkaline agent to the nickel and cobalt solution obtained by removing the iron as described above. The alkali used as a neutralizing agent was calcium hydroxide. Table 7 shows that the recovery rates of both nickel and cobalt hydroxides were 99.99% or more.

[Table 7]

| Classification | Ni | Co |
|---|---|---|
| Liquid after Iron Removal | 13.0g/L | 0.68g/L |
| Nickel, Cobalt Hydroxide | 32.46% | 1.88% |
| Hydroxide Recovery Rate | >99.99% | >99.99% |

While embodiments have been illustrated and described above, it will be apparent to those skilled in the art that modifications and variations could be made without departing from the scope of the present disclosure as defined by the appended claims.

## Claims

1.  A method for recovering nickel and cobalt, comprising:

    reducing a raw material containing nickel, iron and cobalt with a reducing gas containing hydrogen;
    adding an acid to the raw material reduced, and leaching the raw material with the acid, to obtain a solution containing nickel, iron and cobalt ions;
    adding an iron or magnesium-containing hydroxide to the solution to produce a refined solution from which impurities have been removed;
    precipitating nickel and cobalt by adding reduced iron for precipitation to the refined solution containing nickel and cobalt ions;
    adding an acid to a precipitate obtained in the precipitating to be subjected to leaching, to obtain a solution containing nickel, iron and cobalt ions;
    adding an alkaline agent to the solution containing nickel, cobalt and iron ions and oxidizing the solution with oxygen-containing gas to remove iron; and
    adding an alkaline agent to the solution to obtain a nickel and cobalt hydroxides.

2.   The method for recovering nickel and cobalt of claim 1, wherein an amount of the reduced iron for precipitation is 1.5 to 2.5 times a molar sum of nickel and cobalt ions present by Relational Expression 1: Amount (seed ratio) of Reduced iron = (metal Fe content in reduced iron for precipitation)/(Ni+Co ion content in leaching solution)

3.  The method for recovering nickel and cobalt of claim 1, wherein the reduced iron for precipitation is obtained by indirect reduction of an iron chloride calcined-iron ore obtained from a by-product of a nickel smelting process with solid carbon or a reducing gas.

4.  The method for recovering nickel and cobalt of claim 1, wherein a reduction ratio of the reduced iron for precipitation is 80 to 99%.

5.  The method for recovering nickel and cobalt of claim 1, wherein the reduced iron for precipitation has a particle size

of 5 μm or less.

**6.** The method for recovering nickel and cobalt of claim 3, wherein when the iron chloride calcined-iron ore is reduced with a reducing gas, a reduction temperature is 500°C to 950°C.

**7.** The method for recovering nickel and cobalt of claim 3, wherein when the iron chloride calcined-iron ore is reduced with solid carbon, a reduction temperature is 700°C to 1200°C.

**8.** The method for recovering nickel and cobalt of claim 3, wherein formation of the iron chloride calcined-iron ore comprises evaporating and concentrating an iron ion and chlorine ion-containing solution generated as a filtrate in a nickel smelting process to obtain a concentrated solution;
crystallizing the concentrated solution to obtain iron chloride crystals;
solid-liquid separating the iron chloride crystals and a slurry; and
calcining the iron chloride crystals to obtain the iron chloride calcined-iron ore.

**9.** The method for recovering nickel and cobalt of claim 8, wherein the iron ion and chlorine ion-containing solution is a filtrate generated in the nickel smelting process,
the nickel smelting process including,
dissolving a nickel ore containing nickel and iron in hydrochloric acid to obtain a leaching solution in which nickel and iron ions are leached;
adjusting pH by adding an alkaline agent to the leaching solution, and removing solid impurities from the leaching solution by solid-liquid separation;
adding nickel ore containing nickel and iron to the leaching solution, and precipitating nickel as ferronickel; and
filtering and recovering solid precipitates by solid-liquid separation.

**10.** The method for recovering nickel and cobalt of claim 1, wherein the acid added to the raw material reduced, contains a nickel and cobalt-containing acid obtained by treating a post-filtration liquid filtered after precipitation with an ion-exchange resin, to recover remaining nickel and cobalt and by eluting the ion-exchange resin with an acid.

**11.** The method for recovering nickel and cobalt of claim 10, wherein the nickel and cobalt-containing acid obtained by the ion exchange resin is re-introduced into a leaching process.

**12.** The method for recovering nickel and cobalt of claim 1, wherein the alkaline agent is one or more selected from calcium hydroxide and calcium carbonate.

**13.** The method for recovering nickel and cobalt of claim 1, wherein the nickel and cobalt hydroxides are leached with sulfuric acid and subjected to solvent extraction, to produce nickel sulfate and cobalt sulfate.

**14.** The method for recovering nickel and cobalt of claim 1, wherein in the obtaining of the nickel and cobalt hydroxides by adding the alkaline agent, a chlorine component and a calcium component in the leaching solution are removed in the form of calcium chloride.

**15.** The method for recovering nickel and cobalt of claim 1, wherein $H_2S$ is added instead of the alkaline agent.

[Fig. 1]

## INTERNATIONAL SEARCH REPORT

| International application No. |
| --- |
| **PCT/KR2017/015416** |

| A. CLASSIFICATION OF SUBJECT MATTER |
| --- |
| *C22B 3/00(2006.01)i, C22B 23/02(2006.01)i, C22B 5/12(2006.01)i, C22B 3/42(2006.01)i, C22B 3/10(2006.01)i, C22B 1/02(2006.01)i, C22B 23/06(2006.01)i* <br> According to International Patent Classification (IPC) or to both national classification and IPC |

| B. FIELDS SEARCHED |
| --- |
| Minimum documentation searched (classification system followed by classification symbols) <br> C22B 3/00; C22B 23/00; C22B 3/04; C01B 17/96; C01G 53/10; C22B 23/02; C22B 5/12; C22B 3/42; C22B 3/10; C22B 1/02; C22B 23/06 |
| Documentation searched other than minimum documentation to the extent that such documents are included in the fields searched <br> Korean Utility models and applications for Utility models: IPC as above <br> Japanese Utility models and applications for Utility models: IPC as above |
| Electronic data base consulted during the international search (name of data base and, where practicable, search terms used) <br> eKOMPASS (KIPO internal) & Keywords: nickel, cobalt, retrieval, hydrogen reduction, eduction, de-iron, hydroxide |

| C. DOCUMENTS CONSIDERED TO BE RELEVANT | | |
| --- | --- | --- |
| Category* | Citation of document, with indication, where appropriate, of the relevant passages | Relevant to claim No. |
| Y | KR 10-1288961 B1 (RESEARCH INSTITUTE OF INDUSTRIAL SCIENCE & TECHNOLOGY) 22 July 2013 <br> See paragraphs [0023]-[0028], [0033]-[0034] and claim 1. | 1-15 |
| Y | KR 10-2016-0077399 A (POSCO et al.) 04 July 2016 <br> See paragraphs [0069]-[0071], [0106] and claims 1, 3-4, 11, 14. | 1-15 |
| Y | KR 10-1662725 B1 (RESEARCH INSTITUTE OF INDUSTRIAL SCIENCE & TECHNOLOGY) 05 October 2016 <br> See paragraph [0024] and claim 1. | 10-11 |
| Y | KR 10-2012-0133662 A (L&F ADVANCED MATERIALS CO., LTD. et al.) 11 December 2012 <br> See paragraph [0055] and claim 1. | 13 |
| A | KR 10-1664827 B1 (RESEARCH INSTITUTE OF INDUSTRIAL SCIENCE & TECHNOLOGY) 14 October 2016 <br> See paragraphs [0037]-[0069]. | 1-15 |

| ☐ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 30 APRIL 2018 (30.04.2018) | **30 APRIL 2018 (30.04.2018)** |
| Name and mailing address of the ISA/KR <br> Korean Intellectual Property Office <br> Government Complex-Daejeon, 189 Seonsa-ro, Daejeon 302-701, Republic of Korea <br> Facsimile No. +82-42-481-8578 | Authorized officer <br><br> Telephone No. |

Form PCT/ISA/210 (second sheet) (January 2015)

## INTERNATIONAL SEARCH REPORT
Information on patent family members

International application No.

**PCT/KR2017/015416**

| Patent document cited in search report | Publication date | Patent family member | Publication date |
|---|---|---|---|
| KR 10-1288961 B1 | 22/07/2013 | KR 10-2013-0076565 A | 08/07/2013 |
| KR 10-2016-0077399 A | 04/07/2016 | KR 10-1657810 B1 | 20/09/2016 |
| KR 10-1662725 B1 | 05/10/2016 | NONE | |
| KR 10-2012-0133662 A | 11/12/2012 | NONE | |
| KR 10-1664827 B1 | 14/10/2016 | NONE | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020077020915
- JP 2010031341 A
- KR 101353721
- KR 101359179
- KR 101657810